Europäisches Patentamt

European Patent Office

Office européen des brevets

(11) Veröffentlichungsnummer: **0 487 075 A1**

# (12) EUROPÄISCHE PATENTANMELDUNG

(21) Anmeldenummer: **91119848.9**

(22) Anmeldetag: **21.11.91**

(51) Int. Cl.5: **A22B 7/00, B65G 17/22, B65G 47/61**

(30) Priorität: **22.11.90 DE 4037208**

(43) Veröffentlichungstag der Anmeldung:
**27.05.92 Patentblatt 92/22**

(84) Benannte Vertragsstaaten:
**AT BE CH DE DK ES FR GB GR IT LI LU NL SE**

(71) Anmelder: **Riniker AG**

**CH-5102 Rupperswil(CH)**

(72) Erfinder: **Richner, Norbert**
**Junkerngasse 3c**
**CH-5502 Hunzenschwil(CH)**

(74) Vertreter: **Dipl.-Phys.Dr. Manitz**
**Dipl.-Ing.Dipl.-Wirtsch.-Ing. Finsterwald**
**Dipl.-Phys. Rotermund Dipl.-Chem.Dr. Heyn**
**B.Sc.(Phys.) Morgan**
**Robert-Koch-Strasse 1**
**W-8000 München 22(DE)**

(54) **Schlachtanlage.**

(57) Es wird eine Schlachtanlage mit einem Transportbahnsystem (10) für den Transport von Schlachttierkörpern und/oder Tierkörperteilen beschrieben, das eine an zumindest einer Arbeitsstation (18, 20, 22) vorbeiführende Schlachtbahn (24) mit wenigstens einem zugeordneten Förderer (34) umfaßt. Die jeweilige Arbeitsstation (18, 20, 22) weist eine Drehbühne (26) auf, in deren Bereich die Schlachtbahn (24) entlang eines zur Drehachse (A) der Drehbühne (26) konzentrischen Kreises verläuft. Die Drehbühne (26) ist synchron zum die Schlachttierkörper bzw. Tierkörperteile entlang der gebildeten Kreis- bzw. Tierkreisbahn bewegenden Förderer (34) antreibbar.

Fig.2

Die Erfindung betrifft eine Schlachtanlage mit einem Transportbahnsystem für den Transport von Schlachttierkörpern und/oder Tierkörperteilen, das eine an zumindest einer Arbeitsstation vorbeiführende Schlachtbahn mit wenigstens einem zugeordneten Förderer umfaßt. Derartige Schlachtanlagen werden beispielsweise für Schweine, Rinder, Kälber, Schafe und Ziegen verwendet.

Bisher war es üblich, die zum hängenden Transport der Schlachttiere vorgesehene Schlachtbahn zum Ausnehmen und weiteren Behandeln der Tierkörper geradlinig an der jeweiligen Arbeitsstation vorbeizuführen. Jede einzelne Person des an einer jeweiligen Arbeitsstation beschäftigten Personals hatte jeweils dieselbe Arbeit zu verrichten. Hierbei mußten die Arbeiter wiederholt mit der Transportlinie mitwandern und anschließend wieder an eine Ausgangsposition zurückkehren. Der Platzbedarf derartiger Anlagen ist zwangsläufig relativ hoch. Ungünstig ist auch, daß für einen ungestörten Ablauf der einzelnen Arbeitsschritte ein gleich schnelles Arbeiten der an der Schlachtbahn Beschäftigten Voraussetzung ist. Zudem sind die Arbeiten in unterschiedlicher Höhe durchzuführen. Schließlich kommt auch der Einhaltung bestimmter Hygienevorschriften eine wesentliche Bedeutung zu.

Der Erfindung liegt die Aufgabe zugrunde, eine Anlage der eingangs genannten Art zu schaffen, bei der die Arbeitsbedingungen an den jeweiligen Arbeitsstationen unter optimaler Ausnutzung des jeweils zur Verfügung stehenden Raumes wesentlich verbessert werden und insbesondere auch bei einer Beschäftigung einer Vielzahl von Personen im Bereich einer solchen Arbeitsstation die betreffenden Arbeitsschritte ohne das Erfordernis eines ständigen Wechsels der Arbeitspositionen stets reibungslos und kontinuierlich verrichtet werden können.

Gelöst wird diese Aufgabe nach der Erfindung dadurch, daß zumindest eine Arbeitsstation mit einer Drehbühne versehen ist, in deren Bereich die Schlachtbahn wenigstens teilweise entlang eines zur Drehachse der Drehbühne konzentrischen Kreises verläuft und daß die Drehbühne synchron zum die Schlachttierkörper bzw. Tierkörperteile entlang der gebildeten Kreis- bzw. Teilkreisbahn bewegenden Förderer antreibbar ist.

Aufgrund dieser Ausbildung werden die an einer jeweiligen Arbeitsstation beschäftigten Personen durch die Drehbühne mit den Schlachttierkörpern bzw. Tierkörperteilen mittransportiert, so daß ein jeweiliger Arbeiter ohne Positionswechsel an einem jeweiligen Schlachttierkörper bzw. Tierkörperteil sämtliche während des Durchlaufs durch die betreffende Station anfallenden Arbeiten verrichten kann. Nach einem jeweiligen Umlauf der Drehscheibe gelangt eine betreffende Person wieder an eine Ausgangsstelle, an der neue Schlachttierkörper bzw. Tierkörperteile zugeführt werden. Während des darauffolgenden Bühnenumlaufs kann die jeweilige Person wiederum sämtliche Arbeitsschritte am ihr neu zugeführten Tierkörper bzw. Tierkörperteil ausführen. Aufgrund der Anordnung der Arbeitsplätze auf einem Kreis bzw. Teilkreis wird der zur Verfügung stehende Raum optimal ausgenutzt. Der Durchmesser der Drehbühne sowie die vorzugsweise gleichen Abstände zwischen den Schlachttierkörpern bzw. Tierkörperteilen können entsprechend der vorgesehenen Anzahl von Arbeitsplätzen an der betreffenden Arbeitsstation gewählt werden.

Außer der Schlachtbahn ist vorzugsweise wenigstens eine Abführbahn für den Abtransport von den Schlachttierkörpern entnommenen Tierkörperteilen und/oder von konfiszierten Schlachttierkörpern vorgesehen, die wenigstens teilweise entlang der kreis- bzw. teilkreisförmig geführten Schlachtbahn verläuft. Die dem jeweiligen Tierkörper entnommenen Teile können somit von den jeweiligen Arbeitern problemlos auf die Abführbahn gegeben werden. Auch hierzu ist keinerlei Positionswechsel erforderlich.

Insbesondere dann, wenn zumindest eine Ausnehmestation und eine in Förderrichtung hinter dieser liegende Untersuchungsstation vorgesehen ist, ist es zweckmäßig, wenn die Abführbahn an mehreren Arbeitsstationen, d.h. insbesondere sowohl an der Ausnehme- als auch an der Untersuchungsstation, vorbeigeführt ist und dort jeweils zumindest teilweise entlang der kreis- bzw. teilkreisförmig geführten Schlachtbahn verläuft. So ist es zum Beispiel möglich, an der Ausnehmestation die den Schlachttierkörpern entnommenen jeweiligen Tierkörperteile auf die Abführbahn zu geben und an der Untersuchungsstation diese Tierkörperteile zu untersuchen bzw. dort weitere Tierkörperteile auf die Abführbahn zu geben.

Zweckmäßigerweise werden auch die entlang der Abführbahnen transportierten Schlachttierkörper bzw. Tierkörperteile mittels der betreffenden Förderer synchron mit den betreffenden Drehbühnen und gleichzeitig synchron mit dem Schlachtband bewegt. Auch bei z.B. der Ausnehmestation folgenden Stationen, wie insbesondere einer Untersuchungsstation wird somit die betreffende Person wiederum mit dem zu untersuchenden Schlachttierkörper bzw. Tierkörperteil mittransportiert.

Eine weitere wesentliche Erleichterung der jeweiligen Arbeitsschritte wird vorteilhafterweise dadurch erreicht, daß wenigstens die Schlachtbahn zumindest im Bereich einer jeweiligen Arbeitsstation kontinuierlich ansteigt. Insbesondere in der Ausnehmestation können somit bei den üblicherweise mit dem Kopf nach unten hängenden Schlachttierkörpern nacheinander problemlos die Bauch- und Brustorgane entnommen und auf die betreffende Abführbahn gegeben werden.

Insbesondere im Zusammenhang mit der den Bauchorganen zugeordneten Abführbahn ist es zweckmäßig, dieser Abführbahn schalenartige Aufnahmen für die jeweiligen Tierkörperteile zuzuordnen, die mittels des betreffenden Förderers vorzugsweise unterhalb der Schlachttierkörper bewegbar sind.

Ferner kann wenigstens einer Abführbahn, die insbesondere für Brustorgane und/oder konfiszierte Schlachttierkörper bestimmt sein kann, ein Förderer für den Transport von die jeweiligen Tierkörperteile bzw. konfizierten Schlachttierkörper hängend aufnehmenden Mitnahmeelementen zugeordnet sein, die zweckmäßigerweise hakenförmig ausgebildet sind und durch eine Steuerkulisse oder dergleichen in die betreffende Arbeitsstellung bewegbar sein können.

Den hohen Hygieneanforderungen kann auf eine besonders zuverlässige Art und Weise dadurch Rechnung getragen werden, daß an einer jeweiligen Arbeitsstation vorzugsweise zwischen dem Zuführbereich und dem Abführbereich der kreis- oder teilkreisförmig geführten Schlachtbahn und vorzugsweise im Bereich der Drehbühne eine Wasch- und/oder Desinfektionseinrichtung vorgesehen ist. Bevor der jeweilige Arbeiter somit mit dem nächsten Schlachttierkörper bzw. Tierkörperteil befaßt ist, muß er zwangsläufig diese Hygieneeinrichtung passieren. Eine solche Hygieneeinrichtung kann eine Waschkabine mit einem oder mehreren Handwaschbecken und Desinfektionsanlagen für die Messer und dergleichen umfassen.

Erhöhten Hygieneanforderungen wird auch dadurch Rechnung getragen, daß vorteilhafterweise im Bereich der Drehbühne einer betreffenden Arbeitsstation, insbesondere der Ausnehmestation, eine ring- oder teilringförmige stationäre Auffangschale für Abfälle oder dergleichen vorgesehen ist.

Die Beseitigung des in dieser Auffangschale aufgenommenen Abfalls kann in besonders einfacher Weise dadurch erreicht werden, daß in dieser Schale ein vorzugsweise zusammen mit der Drehbühne antreibbarer Schieber geführt ist, über den der Schaleninhalt zu einem Auslaß dieser Schale förderbar ist.

Weitere vorteilhafte Ausführungsvarianten der Erfindung sind in den Unteransprüchen angegeben.

Die Erfindung wird im folgenden anhand eines Ausführungsbeispiels unter Bezugnahme auf die Zeichnung näher erläutert; in dieser zeigt:

Fig. 1 eine schematische Darstellung einer Schlachtanlage mit einem Transportbahnsystem in Draufsicht,

Fig. 2 eine Draufsicht der Entnahmestation der in Fig. 1 gezeigten Schlachtanlage, und

Fig. 3 eine teilweise geschnittene Seitenansicht dieser Entnahmestation.

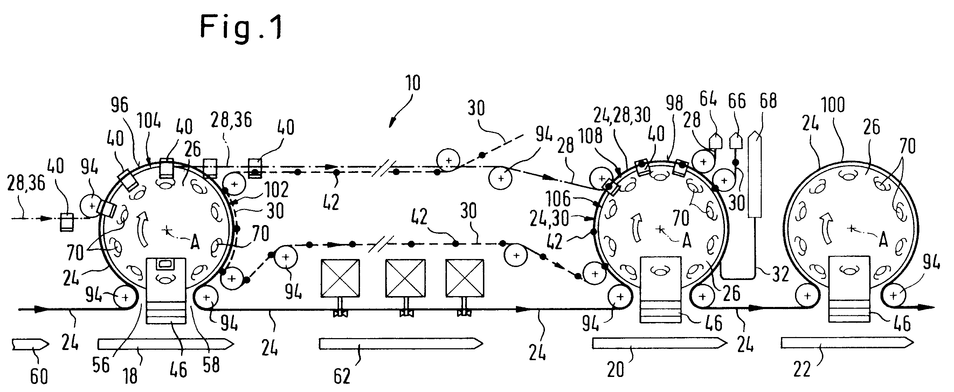

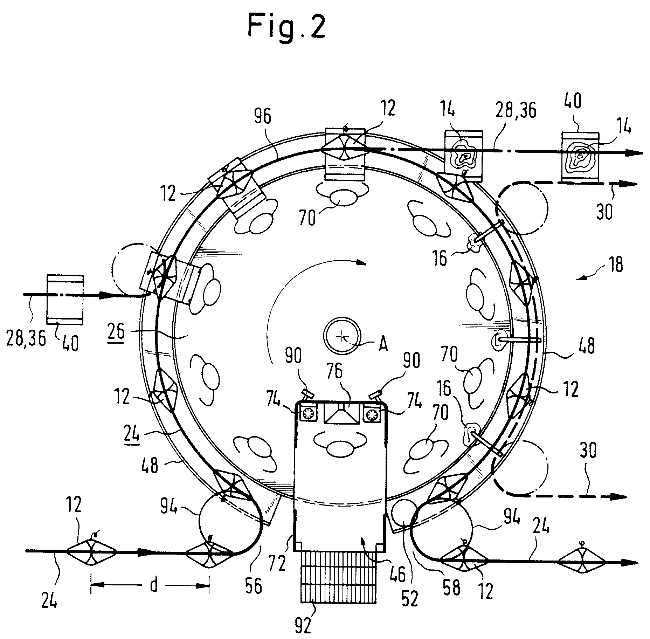

In Fig. 1 ist in rein schematischer Darstellung eine Draufsicht einer Schlachtanlage für Schweine gezeigt, die mehrere Arbeitsstationen wie insbesondere eine Betäubungs- und Enthaarungsstation 60, eine Ausnehmestation 18 für die Entnahme von Bauch- und Brustorganen, eine Spaltstation 62, eine Untersuchungsstation 20 sowie eine Nachputzstation 22 umfaßt. In den Fig. 1 und 2 ist in vergrößerter Darstellung die Ausnehmestation 18 dieser Schlachtanlage gezeigt.

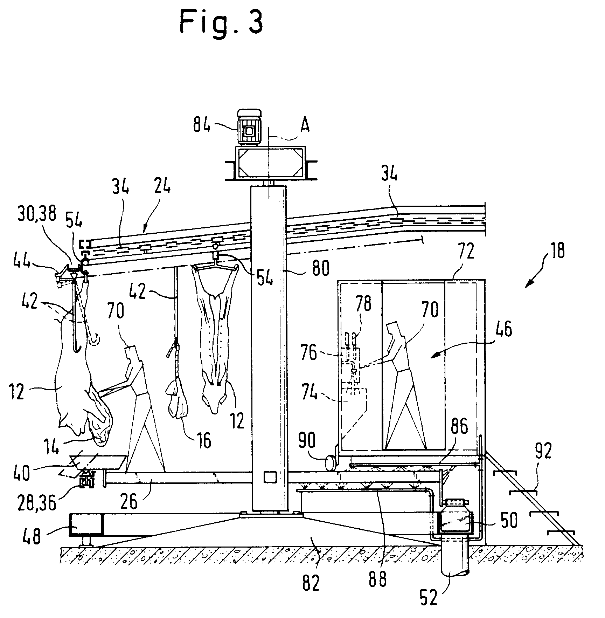

Für den Transport der Schlachttierkörper 12 und/oder Tierkörperteile 14, 16 (vergl. Fig. 2 und 3) ist ein Transportsystem 10 vorgesehen, welches ein an den Arbeitsstationen vorbeigeführtes Schlachtband 24 für den hängenden Transport der Schlachttierkörper aufweist.

Die Ausnehmestation 18, die Untersuchungsstation 20 sowie die Nachputzstation 22 sind jeweils mit einer in Pfeilrichtung um eine Drehachse A drehbaren Drehbühne 26 für das an der jeweiligen Station beschäftigte Personal 70 ausgestattet.

Im Bereich der jeweiligen, eine solche Drehbühne 26 aufweisenden Arbeitsstation 18, 20 bzw. 22 ist die Schlachtbahn 24 entlang eines zur Drehachse A der betreffenden Drehbühne 26 konzentrischen Kreises geführt. Die hierbei durch die Schlachtbahn 24 jeweils gebildete Schleife 96, 98, 100 ist nahezu geschlossen und verläuft jeweils von einem durch eine betreffende Umlenkstelle 94 gebildeten Zuführbereich 56 bis zu einem durch eine weitere Umlenkstelle 94 gebildeten Auslaßbereich 58 der Arbeitsstation (vergl. insbesondere Fig. 2).

Die jeweilige kreisförmige Schlachtbahnschleife 96, 98, 100 st an jeder betreffenden Arbeitsstation 18, 20 bzw. 22 lediglich durch eine zwischen dem Zuführbereich 56 und dem Abführbereich 58 (vergl. Fig. 2) angeordnete stationäre Wasch- und Desinfektionseinrichtung 46 unterbrochen.

Während die Schlachtbahn 24 allgemein geradlinig in einer durch die Folge von Arbeitsstationen 60, 18, 62, 20, 22 bestimmten Richtung verläuft, liegen die genannten, kreisförmigen bzw. teilkreisförmigen Schleifen 96, 98, 100 dieser Schlachtbahn 24 seitlich, im vorliegenden Fall auf derselben Seite dieser Linie.

Die Schlachtbahn 24 verläuft jeweils entlang dem Außenumfang der betreffenden kreisförmigen Drehbühne 26, so daß die an den jeweiligen Arbeitsstationen beschäftigten Personen sich zur Verrichtung der jeweiligen Arbeiten mit Blick nach außen im Bereich des Außenumfangs auf der Drehbühne 26 aufstellen können. Dadurch, daß zwischen den Schlachttierkörpern 12 vorzugsweise gleiche Abstände eingehalten sind, können sich die Personen auf der Drehbühne gleichmäßig verteilen.

Grundsätzlich ist es jedoch auch möglich, eine Arbeitslinie innerhalb der Bühne vorzusehen oder die Bühne ringförmig auszubilden.

An der zwischen der Ausnehmestation 18 und der Untersuchungsstation 20 liegenden Spaltstation 62 ist die Schlachtbahn 24 abweichend von den Arbeitsstationen 18, 20, 22 geradlinig vorbeigeführt.

Außer der für den hängenden Transport der Schlachttierkörper 12 vorgesehenen Schlachtbahn 24 sind drei Abführbahnen 28, 30, 32 vorgesehen, wobei die Abführbahn 28 mit zugeordnetem Förderer 36 für den Abtransport von Bauchorganen 14, wie insbesondere Därme und Magen (vergl. Fig. 2 und 3), die Abführbahn 30 mit zugeordnetem Förderer 38 (vergl. Fig. 3) für den Abtransport von Brustorganen 16, wie insbesondere Lunge und Herz (vergl. Fig. 2 und 3) und die Abführbahn 32 zum Abtransport von konfiszierten Tierkörperteilen bestimmt ist. Diese Abführbahnen 28, 30, 32 sind ebenso wie die Schlachtbahn 24 wiederum über Umlenkstellen 94 geführt.

Die Abführbahnen 28, 30 verlaufen jeweils sowohl entlang einem bestimmten Abschnitt der im Bereich der Ausnehmestation 18 kreisförmig geführten Schlachtbahn 24 als auch entlang einem bestimmten Abschnitt der im Bereich der Untersuchungsstation 20 kreisförmig geführten Schlachtbahn 24.

Die Abführbahn 32 ist lediglich im Bereich der Untersuchungsstation 20 vorgesehen und führt von dieser in Richtung des Pfeiles 68 zu einer nicht gezeigten Abnahmestation. Auch die Abführbahnen 28, 30 sind im Bereich der Untersuchungsstation 20 von dieser weg in Richtung der Pfeile 64 bzw. 66 zu einer betreffenden Abnahmestation geführt.

Die Drehrichtung der Drehbühnen 26 entspricht der Förderrichtung der Schlachttierkörper 12 bzw. Tierkörperteile 14, 16 entlang der Schlachtbahn 24 bzw. der betreffenden Abführbahn 28, 30, 32.

Der durch die Abführbahn 30 im Bereich der Ausnehmestation 18 bestimmte teilkreisförmige Abschnitt 102 liegt in Förderrichtung hinter dem durch die Abführbahn 28 im Bereich dieser Entnahmestation 18 bestimmten, ebenfalls teilkreisförmigen Abschnitt 104.

Im Bereich der Untersuchungsstation 20 beginnt der durch die Abführbahn 30 bestimmte teilkreisförmige Abschnitt 106 in Transportrichtung vor dem durch die Abführbahn 28 bestimmten Abschnitt 108, wobei sich die beiden Abschnitte 106, 108 im letzten Teilbereich überlagern.

Der jeweilige Transport der Tierkörperteile 14, 16 entlang der Abführbahnen 28, 30 erfolgt jeweils an der Ausnehmestation 18 vorbei, von dieser in Richtung Untersuchungsstation 20, an dieser Untersuchungsstation 20 vorbei und anschließend in Richtung der Pfeile 64 bzw. 66 zu den betreffenden Abnahmestellen.

Die der Schlachtbahn 24 und den Abführbahnen 28, 30, 32 zugeordneten Förderer 34, 36, 38 (vergl. insbesondere Fig. 2 und 3) sind einerseits synchron zueinander und andererseits synchron zu den Drehbühnen 26 antreibbar.

Zumindest die Schlachtbahn 24 kann im Bereich einer jeweiligen Arbeitsstation 18, 20, 22 kontinuierlich ansteigend verlaufen, wie dies in Fig. 3 bei der Ausnehmestation 18 gezeigt ist.

Wie anhand der Fig. 1 bis 3 zu erkennen ist, sind der Abführbahn 28 schalenartige Aufnahmen 40 für die den Schlachttierkörpern 12 entnommenen Bauchorgane 14 zugeordnet. Diese schalenförmigen Aufnahmen 40 werden mit einem dem Abstand d zwischen den Schlachttierkörpern 12 entsprechenden Abstand (vergl. Fig. 2) mittels des zugeordneten Förderers 36 (vergl. Fig. 3) unterhalb der Schlachttierkörper 12 entlang dieser Bahn 28 transportiert. In der Ausnehmestation 18 können diese schalenartigen Aufnahmen 40 somit die herunterfallenden Bauchorgane 14 unmittelbar aufnehmen (vergl. insbesondere Figuren 2 und 3).

Anschließend werden diese schalenartigen Aufnahmen 40 von der Ausnehmestation 18 zur Untersuchungsstation 20 und dort wiederum über einen bestimmten Abschnitt hinweg entlang der kreisförmig geführten Schlachtbahn 24 transportiert. Auch im Bereich dieser Untersuchungsstation 20 ist zweckmäßigerweise wiederum ein synchroner Transport von Schlachttierkörpern entlang der Schlachtbahn 24 und schalenartigen Aufnahmen 40 entlang der Abführbahn 28 vorgesehen.

Der zum Abtransport der Brustorgane 16 bestimmten Abführbahn 30 ist ein Förderer 38 zum Transport der die jeweiligen Brustorgane 16 hängend aufnehmenden hakenförmigen Mitnahmeelementen 42 zugeordnet (vgl. insbesondere Fig. 3).

Wie beispielsweise anhand der in Fig. 3 dargestellten Ausnehmestation 18 gezeigt ist, können die hakenförmigen Mitnahmeelemente 42 im Bereich der jeweiligen Arbeitsstation 18, 20 durch eine Steuerkulisse 44 in die betreffende Arbeitsstellung, im vorliegenden Fall zur Drehachse A der Drehbühne 26 hin, bewegbar sein.

Auch die Schlachtbahn 24 ist im vorliegenden Fall als Hängebahn ausgebildet, wobei die Schlachttierkörper 12 entlang dieser Hängebahn mittels Gleit- oder Rollhaken 54 bewegbar sind, die im vorliegenden Fall mittels eines Kettenförderers 34 angetrieben werden (vergl. Fig. 3).

Wie insbesondere anhand der Fig. 2 und 3 zu erkennen ist, ist im Umfangsbereich der Drehbühne 26 der Ausnehmestation 18 eine nahezu geschlossene, lediglich durch die Wasch- und Desinfektionseinrichtung 46 unterbrochene ringförmige, stationäre Auffangschale 48 für Abfälle und dergleichen vorgesehen.

In dieser Auffangschale 48 ist ein im vorliegenden Fall zusammen mit der Drehbühne 26 antreibbarer Schieber 50 (vgl. Fig. 3) geführt, über den der Inhalt der Auffangschale 48 zu einem im Boden dieser Schale vorgesehenen Auslaß 52 förderbar ist. Dieser Auslaß 52 ist am Ende der durch die Einrichtung 46 unterbrochenen ringförmigen Schale 48 vorgesehen.

Insbesondere anhand der Fig. 2 und 3 ist auch erkennbar, daß die stationäre, zwischen dem Zuführbereich 56 und dem Abführbereich 58 der jeweils kreisförmig geführten Schlachtbahn 24 angeordnete Wasch- und Desinfektionseinrichtung 46 als Kabine 72 ausgebildet ist, die mit zwei Handwaschbecken 74 und einer dazwischenliegenden Desinfektionsanlage 76 für die Messer 78 und dergleichen ausgerüstet ist.

Diese Kabine 72 ist am Umfang der Drehbühne 26 vorgesehen und erstreckt sich teilweise oberhalb dieser Bühne zur Drehachse A der Bühne hin. Am der Drehachse A zugewandten Ende ist die Kabine 72 über zwei Räder 90 auf der Drehbühne 26 abgestützt.

Am äußeren Ende ist die Kabine 72 über eine Treppe 92 zugänglich. Über diese Treppe 92 kann das jeweilige Personal 70 auch die Drehbühne 26 betreten. Ferner ist diese Kabine 72 an den beiden Seiten offen, so daß auf der Bühne arbeitende Personen von der einen Seite in die Kabine 72 eintreten und diese auf der anderen Seite wieder verlassen können.

Nachdem eine jeweilige Person 70 den Abführbereich 58 des jeweils kreisförmig geführten Abschnitts des Schlachtbandes 24 erreicht hat, muß sie somit die kabinenartige Wasch- und Desinfektionseinrichtung 46 passieren, bevor sie an den Zuführbereich 56 gelangt, wo sie mit der Behandlung eines neu zugeführten Schlachttierkörpers 12 beginnt.

Die Drehbühne 26 wird an deren Oberfläche sowie an deren Unterfläche jeweils durch eine Sprühlanze 86 bzw. 88 permanent gereinigt.

Gemäß Fig. 3 ist die jeweilige Drehbühne 26 an einer Karusselwelle 80 angebracht, die am unteren Ende drehbar an einem Sockel 82 gelagert und am oberen Ende über einen Antriebsmotor 84 angetrieben ist.

Die Abführbahn 32 zum Abtransport konfiszierter Schlachttierkörper (vgl. Fig. 1 und 2) kann ebenso wie die Schlachtbahn 24 als Hängebahn mit einem Förderer, beispielsweise einem Kettenförderer, zum Antrieb von Gleit- oder Rollhaken oder dergleichen ausgebildet sein.

**Patentansprüche**

1. Schlachtanlage mit einem Transportbahnsystem (10) für den Transport von Schlachttierkörpern (12) und/oder Tierkörperteilen (14, 16), das eine an zumindest einer Arbeitsstation (18, 20, 22) vorbeiführende Schlachtbahn (24) mit wenigstens einem zugeordneten Förderer (34) umfaßt,
dadurch **gekennzeichnet,**
daß zumindest eine Arbeitsstation (18, 20, 22) mit einer Drehbühne (26) versehen ist, in deren Bereich die Schlachtbahn (24) wenigstens teilweise entlang eines zur Drehachse (A) der Drehbühne (26) konzentrischen Kreises verläuft und daß die Drehbühne (26) synchron zum die Schlachttierkörper (12) bzw. Tierkörperteile (14, 16) entlang der gebildeten Kreis- bzw. Teilkreisbahn bewegenden Förderer (34) antreibbar ist.

2. Anlage nach Anspruch 1,
dadurch **gekennzeichnet,**
daß außer der Schlachtbahn (24) wenigstens eine Abführbahn (28, 30, 32) für den Abtransport von den Schlachttierkörpern (12) entnommenen Tierkörperteilen (14, 16) und/oder von konfiszierten Schlachttierkörpern vorgesehen ist, die wenigstens teilweise entlang der kreis- bzw. teilkreisförmig geführten Schlachtbahn (24) verläuft.

3. Anlage nach Anspruch 2,
dadurch **gekennzeichnet,**
daß die Abführbahn (28, 30) an mehreren Arbeitsstationen (18, 20) vorbeigeführt ist und dort jeweils zumindest teilweise entlang der kreis- bzw. teilkreisförmig geführten Schlachtbahn (24) verläuft.

4. Anlage nach Anspruch 3,
dadurch **gekennzeichnet,**
daß zumindest eine Ausnehmestation (18) und eine in Förderrichtung hinter dieser liegende Untersuchungsstation (20) vorgesehen ist, und daß wenigstens eine der Abführbahnen (28, 30) sowohl an der Ausnehmestation (28) als auch an der Untersuchungsstation (20) vorbeigeführt ist.

5. Anlage nach Anspruch 3 oder 4,
dadurch **gekennzeichnet,**
daß auch der Abführbahn (28, 30, 32) wenigstens ein Förderer (36, 38) zur Mitnahme der betreffenden Schlachttierkörper (12) bzw. Tierkörperteile (14, 16) zugeordnet ist und daß die den Transport der Schlachttierkörper (12) bzw. Tierkörperteile (14, 16) entlang der jeweils kreisförmig- bzw. teilkreisförmig geführten Schlachtbahn (24) und entlang der Abführbahn (28, 30, 32) bewirkenden Förderer (34; 36, 38) einerseits synchron zueinander und andererseits synchron zur jeweiligen Drehbühne (26) antreibbar sind.

6. Anlage nach einem der vorhergehenden Ansprüche,

 dadurch **gekennzeichnet,**

 daß wenigstens die Schlachtbahn (24) zumindest im Bereich einer jeweiligen Arbeitsstation (18, 20, 22) kontinuierlich ansteigt.

7. Anlage nach einem der vorhergehenden Ansprüche,

 dadurch **gekennzeichnet,**

 daß wenigstens einer Abführbahn (28) schalenartige Aufnahmen (40) für die jeweiligen Tierkörperteile (14) zugeordnet sind, die mittels des betreffenden Förderers (36) vorzugsweise unterhalb der Schlachttierkörper (12) bewegbar sind.

8. Anlage nach einem der vorhergehenden Ansprüche,

 dadurch **gekennzeichnet,**

 daß wenigstens einer Abführbahn (30) ein Förderer (38) für den Transport von die jeweiligen Tierkörperteile (16) bzw. konfiszierten Schlachttierkörper hängend aufnehmenden Mitnahmeelementen (42) zugeordnet ist, wobei die insbesondere hakenförmigen Mitnahmeelemente (42) im Bereich einer jeweiligen Arbeitsstation (18, 20) vorzugsweise durch eine Steuerkulisse (44) oder dergleichen in die betreffende Arbeitsstellung bewegbar sind.

9. Anlage nach einem der vorhergehenden Ansprüche,

 dadurch **gekennzeichnet,**

 daß an einer jeweiligen Arbeitsstation (18, 20, 22) vorzugsweise zwischen dem Zuführ- und Abführbereich (56 bzw. 58) der kreis- oder teilkreisförmig geführten Schlachtbahn (54) und vorzugsweise im Bereich der Drehbühne (26) eine Wasch- und/oder Desinfektionseinrichtung (46) vorgesehen ist.

10. Anlage nach einem der vorhergehenden Ansprüche,

 dadurch **gekennzeichnet,**

 daß im Bereich der Drehbühne (26) einer betreffenden Arbeitsstation (18) eine ring- oder teilringförmige stationäre Auffangschale (48) für Abfälle und dergleichen vorgesehen ist.

11. Anlage nach Anspruch 10,

 dadurch **gekennzeichnet,**

 daß in der Auffangschale (48) ein vorzugsweise zusammen mit der Drehbühne (26) antreibbarer Schieber (50) geführt ist, über den der Inhalt der Auffangschale (48) zu einem Auslaß (52) dieser Auffangschale (48) förderbar ist.

12. Anlage nach einem der vorhergehenden Ansprüche,

 dadurch **gekennzeichnet,**

 daß die Schlachtbahn (24) als Hängebahn ausgebildet ist, entlang der die Schlachttierkörper (12) mittels Gleit- oder Rollhaken (54) oder dergleichen bewegbar sind, die vorzugsweise mittels eines Kettenführers (34) antreibbar sind.

Fig.1

EP 0 487 075 A1

# Fig.2

# Fig. 3

Europäisches Patentamt

**EUROPÄISCHER RECHERCHENBERICHT**

Nummer der Anmeldung

EP    91 11 9848

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | US-A-3 734 263 (DIRKS) | 1,2,12 | A22B7/00 |
| A | * Spalte 2, Zeile 35 - Zeile 48 * | 4 | B65G17/22 |
| | * Spalte 6, Zeile 56 - Zeile 62; Abbildungen 2-6 * | | B65G47/61 |
| | --- | | |
| A | US-A-3 376 828 (HAGER) | 10 | |
| | * Spalte 2, Zeile 70 - Spalte 3, Zeile 1; Abbildung 2 * | | |
| | --- | | |
| A | US-A-4 090 275 (JORGENSEN) | | |
| | --- | | |
| A | US-A-4 208' 765 (DENEFE) | | |
| | ----- | | |

|  |
|---|
| **RECHERCHIERTE SACHGEBIETE (Int. Cl.5 )** |
| A22B |
| B65G |

Der vorliegende Recherchenbericht wurde für alle Patentansprüche erstellt

| Recherchenort | Abschlußdatum der Recherche | Prüfer |
|---|---|---|
| DEN HAAG | 24 JANUAR 1992 | VON ARX V. U. |